(19) Europäisches Patentamt
European Patent Office
Office européen des brevets

(11) **EP 4 660 487 B1**

(12) **EUROPEAN PATENT SPECIFICATION**

(45) Date of publication and mention
of the grant of the patent:
**10.06.2026 Bulletin 2026/24**

(21) Application number: **25174815.8**

(22) Date of filing: **07.05.2025**

(51) International Patent Classification (IPC):
**F16J 15/3288** *(2016.01)*

(52) Cooperative Patent Classification (CPC):
**F16J 15/3288**

(54) **BRUSH SEAL**

BÜRSTENDICHTUNG

JOINT À BROSSE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.06.2024 GB 202408033**

(43) Date of publication of application:
**10.12.2025 Bulletin 2025/50**

(73) Proprietor: **Rolls-Royce plc**
**London N1 9FX (GB)**

(72) Inventors:
• **Franceschini, Gervas**
**Derby, DE24 8BJ (GB)**
• **Gillespie, David**
**Derby, DE24 8BJ (GB)**
• **Owen, Andrew**
**Derby, DE24 8BJ (GB)**
• **Ibrahim, Amir**
**Derby, DE24 8BJ (GB)**

(74) Representative: **Rolls-Royce plc**
**P.O. Box 31**
**IP Department (SinA-48)**
**Derby Derbyshire DE24 8BJ (GB)**

(56) References cited:
GB-A- 2 367 099          US-A- 5 201 530
US-A1- 2004 119 237      US-A1- 2005 006 851
US-A1- 2012 326 393

**Description**

**FIELD**

This disclosure relates to a brush seal. In particular it relates to an annular brush seal for use in a gas turbine engine.

**BACKGROUND**

Brush seals are used to provide a seal between adjacent components that are rotatable relative to each other. For example, brush seals may be used to form a seal between a rotor of a gas turbine engine and an adjacent static structure. Here, the brush seal comprises an annular array of bristles (a bristle pack), supported by a carrier.

During operation, a pressure differential across the brush seal may act on the bristles of the brush seal, forcing the tips of the bristles against the adjacent component, such as the gas turbine rotor. This can lead to wear of the brush seal bristles and localised heat generation, especially during an initial bedding in period of the seal. Over a prolonged period, this may also lead to a reduced sealing effectiveness.

GB 2367099 A discloses an annular brush seal according to the preamble of claim 1.

It would be desirable to develop an improved form of brush, such that wear rates of the brush seal bristle tips, particularly during initial operation, may be better controlled.

**SUMMARY**

According to a first aspect there is provided an annular brush seal comprising a bristle pack formed of bristles and a bristle pack support, supporting the bristle pack. The bristle pack has an upstream face, a downstream face and a sealing face. The sealing face comprises an upstream portion and a downstream portion that is adjacent to the upstream portion. A length of at least a fraction of the bristles of the upstream portion is shorter than a length of the bristles of the downstream portion.

The length of the at least a fraction of the bristles of the upstream portion decreases as the upstream portion of the sealing face extends from the downstream portion of the sealing face towards the upstream face.

The decrease in length of the bristles in the upstream portion of the sealing surface varies to form a circumferentially repeating pattern at an interface between the upstream portion of the sealing surface and the upstream surface.

An axial extent of the upstream portion of the sealing face may be no greater than (n-2) rows, wherein n is a number of rows of bristles of the bristle pack.

A diameter of the bristles of the bristle pack may be in the range of 75 to 200 micrometres. The diameter of the bristles of the bristle pack may be in the range of 100 to 150 micrometres.

A lay angle of the bristles of the bristle pack may be in the range of 20degrees to 55degrees. The lay angle of the bristles in the bristle pack may be in the range of 30 degrees to 45 degrees.

The circumferentially repeating pattern may be a periodic circumferentially repeating pattern - i.e., the repeating patterns may be equi-spaced around the circumference of the annular brush seal.

A number of the circumferentially repeating pattern per annular brush seal may be dependent upon a characteristic dimension such as a diameter of the brush seal, with larger seals comprising a greater number of circumferentially repeating patterns than smaller seals. A circumferential spacing between adjacent repeating patterns may be in a range of 10 patterns to 200 patterns per metre circumference of the brush seal, preferably in a range of 40 to 200 patterns per metre circumference of the brush seal. More specifically, the number of circumferentially repeating patterns per metre may be a prime number within this range.

The circumferentially repeating pattern may be configured to generate hydrodynamic lift when the brush seal seals a rotating member such as a shaft of a gas turbine engine.

The circumferentially repeating pattern may be a scallop, may be substantially pyramidal, may be substantially prismatic, may be substantially cuboid or may comprise a first substantially prismatic pattern directly connected to a second substantially prismatic pattern. Different types of the above repeating patterns may be interleaved with each other.

The bristle pack support may additionally comprise a backing plate. If so, the backing plate is configured to mechanically support the bristle pack when the bristle pack is subjected to a pressure differential across the brush seal. The backing plate may further comprise at least one radially-extending groove, the radially extending groove having a radially inboard end and extending in a radially outboard direction to a radially outboard end. The at least one radially-extending groove is in a surface of the backing plate that faces the bristle pack. The at least one radially extending groove (if present) is configured to permit the application of a pressure force between the downstream bristles of the bristle back and the surface of the backing plate facing the bristle pack. This reduces frictional forces acting between the most downstream bristles and the backing plate, permitting easier movement of the downstream bristles.

If the backing plate comprises a single radially-extending groove, the radial groove may also extend circumferentially around the surface of the backing plate facing the bristle pack. This may also be referred to as an annular groove.

If the backing plate comprises a plurality of radial grooves, an orientation of the plurality of radial grooves in the surface of the backing plate may be different to an orientation of the bristles of the bristle pack, when viewed in a circumferential plane. In some examples, the orientation of the radial grooves and the orientation of the bristles may be perpendicular to each other. In this way, a greater proportion of the bristles in the most downstream row of the bristle pack may be exposed to the pressure force acting within the backing plate grooves.

According to a second aspect there is provided a gas turbine engine comprising the annular brush seal as disclosed in the above paragraphs of the summary.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

## BRIEF DESCRIPTION OF THE DRAWINGS

Embodiments will now be described by way of example only with reference to the accompanying drawings, in which:

FIG. 1 shows a gas turbine engine;
FIG. 2 shows a brush seal, suitable for use in a gas turbine engine;
FIG. 3 shows a control volume around an idealised brush seal;
FIG. 4 shows an example tip portion of a brush seal, comprising an upstream chamfer;
FIG. 5A shows an example of static pressure contours for the tip portion of a brush seal having no chamfer;
FIG. 5B shows an example of static pressure contours for the tip portion of a brush seal having a low chamfer angle;
FIG.5C shows an example of static pressure contours for the tip portion of a brush seal having an intermediate chamfer angle;
FIG 5D shows an example of static pressure contours for the tip portion of a brush seal having a high chamfer angle;
FIG. 6 shows an example tip portion of a brush seal, comprising an upstream step;
FIG. 7 shows an example tip portion of a brush seal, comprising an upstream chamfer-step;
FIG. 8 shows an example tip portion of a brush seal, comprising an upstream step-chamfer;
FIG. 9 shows an example tip portion of a brush seal, comprising upstream missing bristle tips to form an effective front chamfer;
FIG. 10 shows an example tip portion of a brush seal, comprising a chamfer with missing bristle tips;
FIG. 11 shows an example brush seal, comprising a scalloped upstream chamfer;
FIG. 12 shows a first circumferential cross-section of the example brush seal of FIG. 11;
FIG. 13 shows a second circumferential cross-section of the example brush seal of FIG. 11;
FIG. 14 shows an example brush seal comprising a circumferentially repeating pyramidal pattern;
FIG. 15 shows an example brush seal comprising a circumferentially repeating pyramidal pattern in the form of a saw-tooth;
FIG. 16 shows an example brush seal comprising a circumferentially repeating prismatic pattern;
FIG. 17 shows an example brush seal comprising a circumferentially repeating pattern comprising a first prismatic pattern directly connected to a second prismatic pattern;
FIG. 18 shows a first example circumferential cross-section of the example brush seal of FIG.17;
FIG. 19 shows a second example circumferential cross-section of the example brush seal of FIG. 17;
FIG. 20 shows an example brush seal comprising an upstream chamfer and a backing plate comprising a radially-extending groove;
FIG. 21 shows a three-dimensional view of a sector of the example brush seal of FIG.9; and
FIG. 22 shows a three-dimensional view of a sector of the example brush seal of FIG. 11.

## DETAILED DESCRIPTION

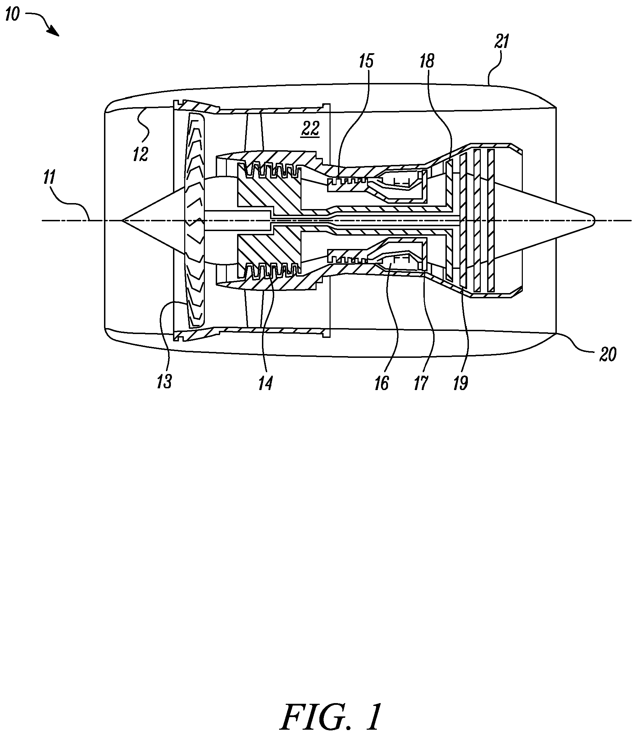

With reference to FIG 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

From the above disclosure, it will be appreciated that a typical gas turbine engine may comprise internal chambers which may be adjacent to each other yet may be pressurised to a different level such that a pressure differential exists between the chambers. It will also be readily appreciated that a rotating component, such as at least one of the interconnecting shafts of the gas turbine may pass through these chambers, making it desirable, if not essential to seal these chambers from one another. A brush seal, such as an annular brush seal, is a suitable way to do this.

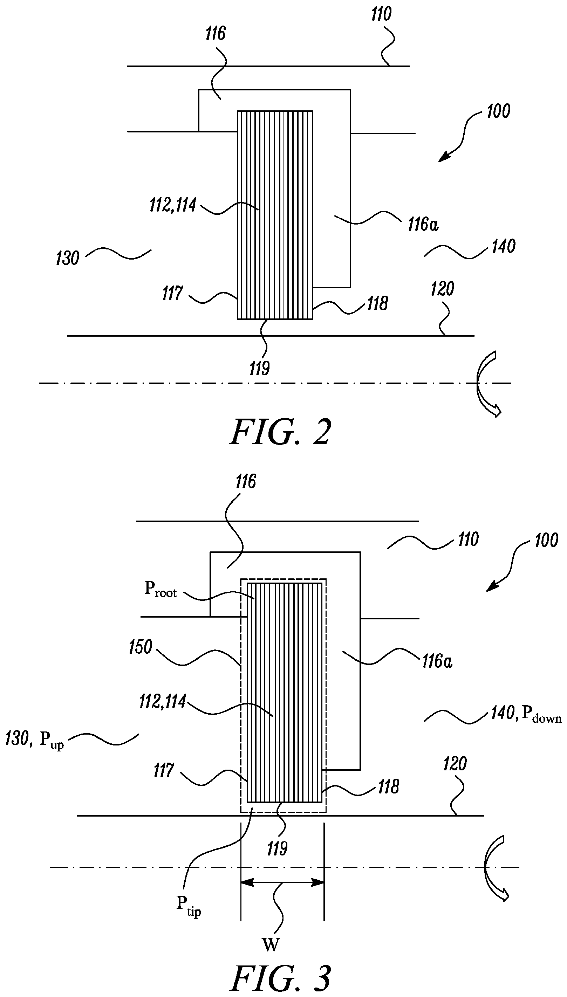

**FIG.** 2 provides an example of a cross-section of a brush seal 100.

The brush seal 100 is an annular brush seal 100. It forms a seal between a static structure 110 and a rotating member 120 (e.g., a gas turbine engine interconnecting shaft or drive shaft that is co-axial with the annular brush seal 100).

The brush seal 100 comprises a layered array of bristles 112 that are collectively referred to as a bristle pack 114. The brush seal 100 seals an upstream chamber 130 from a downstream chamber 140, the upstream chamber 130 being at a higher static pressure to the downstream chamber 140. The successive layers of bristles extend in an axial direction between the upstream chamber 130 and the downstream chamber 140, each layer extending circumferentially around the annular bristle pack. The bristle pack may be hexagonally close packed with layers of bristles aligning substantially into the interstices of the adjacent row. The bristles may be orientated to have a radial extent, being orientated at an angle to the true radial by a "lay angle" in the direction of rotation of rotating member 120. The lay angle of the bristles of the bristle pack may be in the range of 20 degrees to 55 degrees. The lay angle of the bristles in the bristle pack may be in the range of 30 degrees to 45 degrees.

The layers are at different axial positions.

Here, "close packed" means that adjacent bristles in the bristle pack, or adjacent groups of bristles in the bristle pack, are in close proximity to each other such that a lateral force, acting with a force component that is substantially perpendicular to the elongate length of a bristle, is at least partially resisted by contact and / or friction between that bristle and adjacent bristles.

A close-packed (or closely-packed) bristle pack is therefore better able to resist lateral loading than a less close-packed bristle pack because adjacent bristles in the closely-packed bristle pack provide mechanical support to each other.

The degree to which a bristle pack is close-packed may also be referred to as a degree of compaction of the bristle pack. The degree of compaction of the bristle pack influences the mechanical behaviour of the bristle pack when it is exposed to external forces.

The degree of compaction may additionally depend upon the diameter of bristles in the bristle pack and/or the lay angle of the bristles in the bristle pack. A diameter of the bristles of the bristle pack may be in the range of 75 to 200 micrometres. The diameter of the bristles of the bristle pack may be in the range of 100 to 150 micrometres.

Examples of external forces which act on the bristle pack include lateral forces which are related to a pressure drop across the brush seal between the upstream chamber and downstream chamber, and lift forces such as hydrostatic lift, and hydrodynamic lift, which lift the tips of at least a portion of the bristles of the bristle pack away from the rotating member 120.

Although the above disclosure relates to an annular brush seal in which the bristle pack is radially outboard of a rotating member 120, other forms of brush seal are also possible. For example, a brush seal may be disposed in an axial sense (i.e. the bristle pack forming the end of a cylinder). Alternatively, the brush seal may be a radially disposed brush seal, in which the bristles of the bristle pack are radially inboard of rotating member 120.

It will be understood that although the following disclosure is made in terms of a radially disposed brush seal in which the bristle pack is radially outboard of the rotating member 120, the principals subsequently outlined are equally applicable to other geometries of brush seal.

The bristle pack 114 of the brush seal 100 comprises an upstream face 117, a downstream face 118 and a sealing face 119. The upstream face faces the upstream chamber 130; the downstream face faces the downstream chamber 140; the sealing face 119 faces the rotating member 120. The sealing face 119 may be in contact with the rotating member 120. Contact between the sealing face (i.e., the tips of bristles 112) and the rotating member 120 may generate friction when the rotating member 120 is rotating. Friction may lead to friction-induced heating at an interface between the sealing face 119 and the rotating member 120. This may damage the seal by damaging or eroding the tips of bristles 112 and/or the surface of the rotating member 120 contacted by the bristles 112.

Friction-induced heating may also cause a radial growth of the rotating member 120. In severe cases, this may in turn cause a feedback loop, in which the radial growth of the rotating member increases the degree of friction-induced heating which in turn causes further radial growth of the rotating member etc. In extreme cases, this can cause a rotor thermal runaway in which significant damage is caused to the bristles and/or surface of the rotating member 120.

The length of the bristles 112 of the bristle pack 114 may be aligned in a direction that has a substantial radial extent but is inclined at a slight angle to the circumferential direction. This angle may be referred to as a "lay-angle" and enables the bristles to accommodate rotation and/or flexing of the rotating member 120.

The bristle pack is supported by a bristle pack support 116, which secures one end of the each of the bristles 112 of the bristle pack 114 in position. The bristle pack support 116 may comprise a backing plate 116a and, optionally, an upstream plate (not shown in FIG 2).

The backing plate 116a (and the upstream plate, if present) may be an annular ring. The radial extent of the backing plate 116a may be greater than the radial extent of the upstream plate (if present).

The purpose of the backing plate is to provide mechanical support to the bristles 112 and bristle pack 114 when a static pressure differential is present across the brush seal 100.

The purpose of the upstream plate (if present) is to shield the brush pack from unsteady upstream air, turbulence and high speed swirling flow that could pick up the front bristles and damage the seal. For this reason the upstream plate may also be referred to as a "Swirl Shield".

A secondary purpose of the upstream plate is that it may also provide mechanical support to the bristles 112 and bristle pack 114 if a pressure reversal and flow reversal is caused across the brush seal 100 due to a transient operating condition of the apparatus in which the brush seal is installed. This may be advantageous as otherwise the pressure and flow reversal could cause deformation of the bristles that are at or proximal to the upstream face 117 of the bristle pack, reducing the degree of compaction of these bristles within the bristle pack, with a subsequent reduction in the hydrostatic and optionally, hydrodynamic lift generated by the brush seal.

During operation of an apparatus comprising the annular brush seal 100, a pressure drop, equal to the difference in static pressure between the upstream chamber 130 and the downstream chamber 140 is generated across the annular brush seal. The pressure drop causes a leakage of fluid (for example, air) from the upstream chamber 130 to the downstream chamber 140. The leakage may occur through the bristles 112 of the bristle pack 114 and / or across the tips of the bristles 112 of the bristle pack 114 of the sealing face 119. The magnitude of leakage through the bristles 112 of the bristle pack 114 is dependent upon the degree of compaction of the bristles within the bristle pack, with a higher degree of compaction correlating to a lower degree of through-bristle leakage.

The magnitude of the pressure drop (and consequently, the magnitude of leakage) across the annular brush seal 100 may be based at least in part on an operating condition of the apparatus comprising the annular brush seal 100. For example, in the case that the apparatus is a gas turbine engine 10, the pressure drop may increase when the power (thrust, in the case of gas turbine engine for aviation) is increased.

During operation of the apparatus comprising the brush seal, the tips of the layers of bristles are subjected to a force, known as a blow-down force. The magnitude of the blow-down force is related to the magnitude of the pressure differential across the brush seal.

The blow-down force causes the bristles to deflect. The tips of the bristles 112 may be pressed in contact against the rotating member 120. This contact creates an effective seal between the bristles and the rotating member (e.g. gas turbine engine interconnecting shaft) but may also create a frictional force and localised heating. In time, the bristle tips may wear away, with the wear rate related to the magnitude of the contact force between the bristle tip and the rotating component.

Consequently the sealing effectiveness of the brush seal may be characterised by an initial decline due to more rapid wearing of the bristle tips, followed by a slower, plateauing rate of decline as wear rates drop.

It will be appreciated that as the sealing effectiveness of the brush seal declines, the magnitude of leakage between the upstream chamber and downstream chamber increase at a constant pressure differential. This may have a detrimental effect on the apparatus comprising the brush seal. For example, in the case that the apparatus is a gas turbine engine, an increase in leakage across the brush seal may cause an increase in fuel consumption of the gas turbine engine or even a reduction in the permissible time period between overhauls, if degradation is excessive.

From the above disclosure, it will therefore also be readily appreciated that it is desirable to be able to control the contact force between the bristle tips of the brush seal and the rotating component, such that the rate and / or magnitude of brush seal degradation is reduced.

This is outlined below with reference to operation of the brush seal in relation to the generation of hydrostatic lift to support the tips of the bristles, and in relation to the generation of hydrodynamic lift to support the tips of the bristles.

Considering hydrostatic operation first, **FIG.** 3 illustrates a control volume analysis of an idealised linear brush seal, having a cross-section as the annular brush seal of FIG. 2. In FIG.3, the control volume 150 is shown as a dotted rectangle, surrounding bristle pack 114.

In FIG 3 the brush seal has a bristle pack of unity length into the page and width w in an axial direction between upstream face 117 and downstream face 118.

The force $F_{root}$ on the control volume from the pressure $P_{root}$ at the root of the bristle pack, adjacent to the bristle pack support, is:

$$F_{root} = P_{root} * w \qquad \text{[Equation 1]}$$

This is partially balanced by an outwards force at the bristle tips:

$$Ftip = Ptip * w \qquad \text{[Equation 2]}$$

The net inwards (blow-down) force, producing a contact force between rotating surface and bristle tips is therefore:

$$Fnet = Froot - Ftip = Proot*w - Ptip*w \qquad \text{[Equation 3]}$$

A pressure profile across the width w of the bristle pack 114 at the bristle root is approximately constant and equal to the static pressure of the upstream chamber 130. i.e.:

$$\text{average } (Proot) \approx Pup \qquad \text{[Equation 4]}$$

This is because there is very little fluid flow through the bristle pack at the bristle root.

Alternatively, as there is a greater degree of fluid flow at the bristle tips, the pressure profile under the bristle tip changes across the width w of the seal from the static pressure in the upstream chamber 130 to the static pressure in the downstream chamber 140.

Hence, the pressure at a bristle tip at an intermediate axial location between the upstream pressure to downstream pressure and may be expressed as:

$$Ptip = Pup - a * (Pup - Pdown) \qquad \text{[Equation 5]}$$

where a is some pressure greater than $P_{down}$ and less than $P_{up}$.

For example, if the pressure drop were linear through the bristle pack 114 then:

$$a = 0.5 \qquad \text{[Equation 6]}$$

and,

$$\text{mean}(P_{tip}) = 0.5*(P_{up}+P_{down}) \qquad \text{[Equation 7]}$$

The blow-down load on the seal segment is therefore

$$a * (Pup - Pdown) * w \qquad \text{[Equation 8]}$$

Applying these principles to an annular brush seal, if the bristle pack has a sufficiently high degree of compaction (i.e., the bristle pack is highly ordered, aligned or close-packed) such that it may deflect as a unit (i.e., a force acting on a portion of the bristle pack at one location (for example, axial or circumferential) causes bristle motion in a radial direction not only at that axial or circumferential portion of the bristle pack, but at adjacent portions of the bristle pack), then the blow down displacement caused at one portion of the bristle pack may be adjusted by adjusting the pressure acting on the tips of bristles of another (different) portion of the sealing face 119 of the annular brush seal 100. In other words, for a bristle pack with a suitable (high) degree of compaction, a change in running clearance or contact force between the bristles at one portion of the bristle pack and the rotating member (running clearance increased or contact force decreased) may be achieved by reducing the net blowdown force acting on a different portion of the bristle pack. For example (as is later disclosed), a running clearance or contact force between bristles in a downstream portion of the bristle pack may be changed by controlling a lift force generated between the bristles of an upstream portion of the bristle pack, the upstream portion being different to the downstream portion. The magnitude of this effect depends upon the degree of compaction of the bristle pack. The magnitude of this effect also reduces with distance away from the point at which force is applied, as even a highly compacted bristle pack (e.g., a highly order or highly aligned bristle pack with closepacking between adjacent bristles) may not act as a single entity.

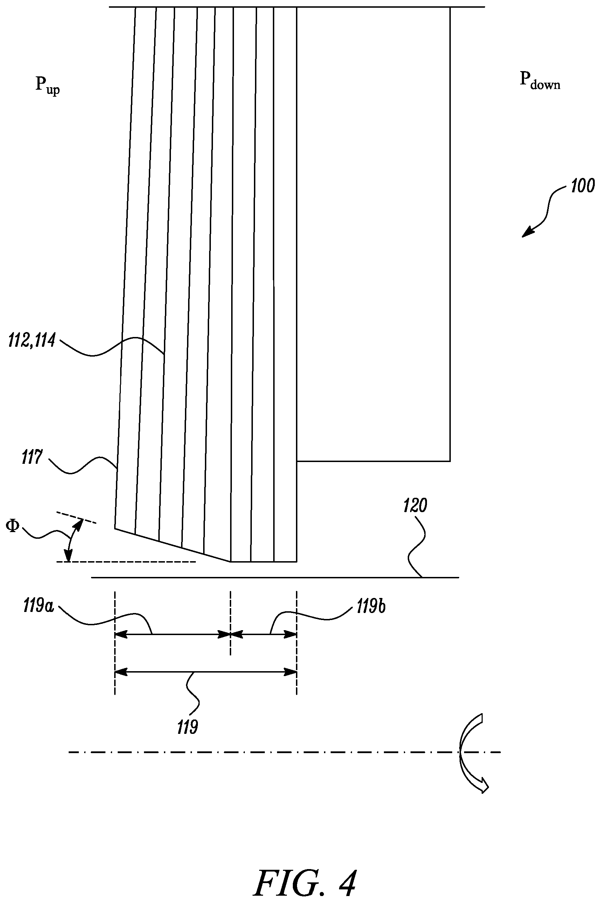

However, use may be made of this effect to reduce the blowdown load at one portion of the bristle pack (reducing wear etc) by applying a force to a different portion of the bristle pack. This is illustrated in FIGS. 4 to 8 which show several bristle pack 114 geometries which reduce the overall hydrostatically generated blowdown load by increasing the force acting on the tips of the bristles at sealing face 119.

These geometries work in a similar manner, i.e., by increasing a clearance between the bristle tips and rotating member 120 in an upstream portion 119a of the sealing face 119, such that the tips of the upstream portion 119a of sealing face 119 are exposed to the static pressure $P_{up}$ of upstream chamber 130, rather than to a progressive reduction in static pressure with axial location, as occurs in the examples of FIGS. 2 and 3.

The degree of compaction bristle pack may be such that the bristle pack moves in unison when subjected to a pressure force acting on the tips of the bristles at the sealing face 119. In other words, when consolidated to act as a grouped but flexible unit, the close-packed arrangement of the bristles in the bristle pack 114 is such that when an increased pressure ($P_{up}$) is applied at the tips of the bristles 112 of the upstream portion 119a of sealing face 119, rather than causing separate bending of individual bristles of the upstream portion bristles along their length, the resulting force is transmitted through the bristle pack by contact between adjacent bristles to cause movement of the bristles that are not adjacent to the point at which force is applied. Hence in a bristle pack with a suitably high degree of compaction, movement of the upstream bristles (the tips of which make up the upstream portion 119a) also moves the downstream bristles (the tips of which make up the downstream portion 119b). This reduces the contact force between the bristle tips of the downstream portion 119b of sealing face 119 against rotating member 120 and reduces the wear rate and frictional heating of the downstream portion 119b of the sealing face.

FIG. 4 differs from FIG. 2 in that a chamfer has been applied proximal to the intersection between the upstream portion 119a of sealing face 119 and upstream face 117. This alters the pressure distribution across sealing face 119 relative to FIG. 2 as the static pressure Pup of the upstream chamber 130 is present in the chamfered portion of the brush seal. This increases the total force acting on the bristle tips of the brush seal, reducing the blow-down load acting on the seal.

Various angles of chamfer Φ (chamfer angle) are possible, in which the angle of the chamfer is defined as the angle of inclination between the upstream portion 119a and the downstream angle 119b of sealing face 119. It will be understood that in FIG. 4 the surface of the upstream portion 119a of the sealing face 119 is a frustoconical surface.

The chamfer angle Φ may be in the range of 5 degrees to 50 degrees.

More specifically: the chamfer angle may be in the angular range of 5 degrees to 10 degrees; the chamfer angle may be in the angular range of 10 degrees to 20 degrees; the chamfer angle may be in the angular range of 20 degrees to 30 degrees; the chamfer angle may be in the angular range of 30 degrees to 40 degrees; or the chamfer angle may be in the angular range of 40 degrees to 50 degrees.

A smaller chamfer angle (10 degrees to 30 degrees; preferably 15 degrees to 30 degrees) may be desirable because it may maintain the inside bristle pack pressure distribution, whilst sharing axial load across the majority of the bristle pack.

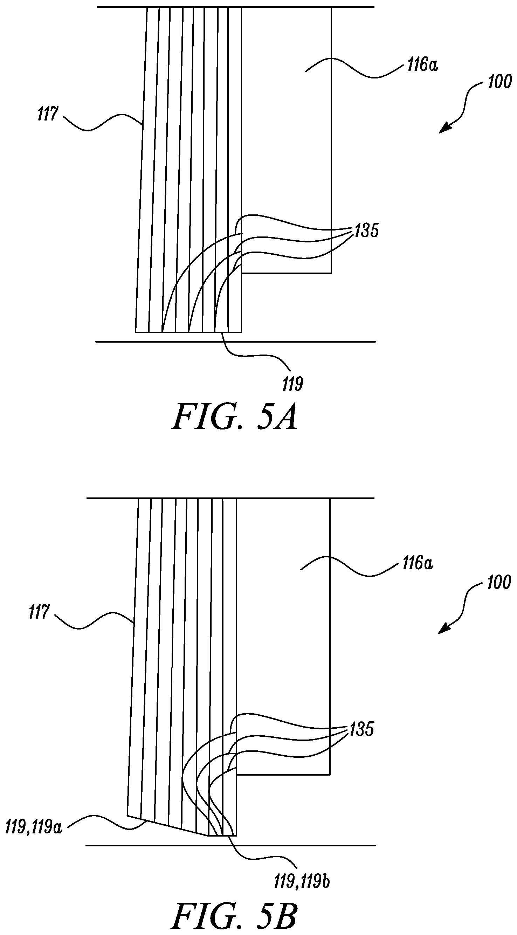

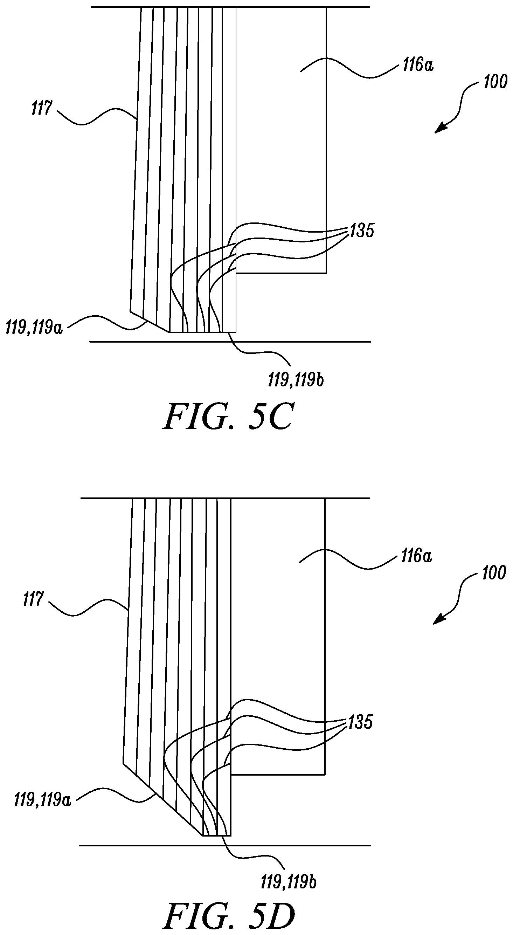

This may be understood by reference to FIG. 5A through FIG. 5D, which show static pressure contours 135 in the vicinity of the sealing face 119 for a non-chamfered brush seal (FIG. 5A), a low chamfer angle (15 degrees) brush seal in which the chamfer extends over approximately 3/4 of the width of the brush seal, but does not extend over the final two downstream bristle rows (FIG. 5B), an intermediate chamfer angle (30 degrees) brush seal in which the chamfer extends over approximately a third of the width of the brush seal 100 (FIG. 5C), and a high chamfer angle (50 degrees) brush seal (FIG. 5D).

The non-chamfered brush seal has an approximately linear pressure drop under the bristle pack at the sealing face and therefore has pressure contours 135 that show a gradual pressure reduction towards the downstream region (FIG.5A).

With a chamfer angle brush seal (FIGS 5B - 5D), there is little static pressure drop under the upstream portion 119a of the sealing face 119 of the bristle pack. This alters the static pressure contours relative to those of FIG 5A such that most of the pressure drop is now concentrated at the downstream portion 119b of the sealing face, towards the backing plate 116. However, the pressure drop between the upstream chamber and downstream chamber is still carried by the whole bristle pack. Any lift force shared between compacted bristles of the upstream portion 119a is substantially shared with the final rows of bristles of the bristle pack which make up downstream portion 119b, and hydrostatic pack lifting is possible.

The degree of hydrostatic lifting obtained may be based upon the degree of compaction of the bristle pack, the magnitude of the chamfer angle and/or the extent of the chamfer over the width of the bristle pack. For example, the bristle packs of both FIGS 5B and 5C may generate acceptable levels of hydrostatic lift. Preferably, the range of chamfer angle is therefore 15 degrees to 30 degrees; preferably the range of chamfer extent is therefore 30 percent axial width up to but not including the final two downstream bristle rows. Preferable chamfered brush seals may therefore comprise any combination of the range of 15 degrees to 30 degrees chamfer angle and 30 percent axial width up to but not including the final two downstream bristle rows.

Similarly, with a high chamfer angle (e.g., (50 degrees)) brush seal (FIG 5D), there is also little static pressure drop under the upstream portion 119a of the sealing face 119b of the bristle pack 114. However, increasing the chamfer angle relative to FIG 5B has reduced the effective width of the downstream portion 119b.

The downstream rows of bristles are now more likely to lose local bristle pack compaction with the rest of the pack. This is because these bristles are exposed to a greater axial pressure force than the comparable downstream bristles of FIGS. 5B and 5C, due to the larger chamfer angle of FIG. 5D. Deflection of the downstream bristles in an axially downstream direction is thus more likely to occur. As deflection occurs, an axial gap, running substantially circumferentially around the annular brush seal may be formed, breaking the contiguous interlocked nature of the bristle pack. Lift generated at the upstream portion of the sealing face is now providing less lifting effect to the downstream portion of the bristle pack, as the axial gap has reduced, if not removed, frictional contact between the upstream bristles and downstream bristles. Thus, static pressure derived blowdown forces acting on the downstream portion 119b sealing face 119 of FIG 5D (high chamfer angle) are greater than the static pressure derived blowdown forces acting on the downstream portion 119b of sealing face 119 of FIGS. 5B and 5C, increasing the wear rate of the downstream bristles for the same pressure drop across the seal.

For higher chamfer angles, it is therefore desirable to reduce the pack penetration depth in order to maintain bristle pack compaction.

Furthermore, as the axial pressure force acting on the tips of the downstream bristles of FIG. 5D is increased relative to FIGS. 5B and 5C due to the increased chamfer angle, the contact force between these downstream bristles and the backing plate 116b is also increased. This increases friction between the bristles and the backing plate, increasing the contact force between the rotating member and downstream bristle tips, increasing wear.

A smaller shallow upstream chamfer (for example, 10 to 30 degrees; preferably 15 to 30 degrees) is therefore preferable to a larger upstream chamfer. Smaller chamfer angle upstream chamfers can penetrate further into the bristle pack than higher angle upstream chamfers without detrimentally affecting bristle compaction.

A starting point (radial height) of the chamfer may be set to equal the maximum expected wear in limit for the seal.

A width extent of the chamfer may be at least 30% of the axial width of the seal but may not include the final two downstream rows of bristles (circa. 20%) of the axial width of the seal. In other words, for a brush seal comprising n axially-spaced rows of bristles, in which n= 1 corresponds to the bristles forming the upstream face of the bristle back, the chamfer extends downstream over no more than (n-2) rows from n= 1.

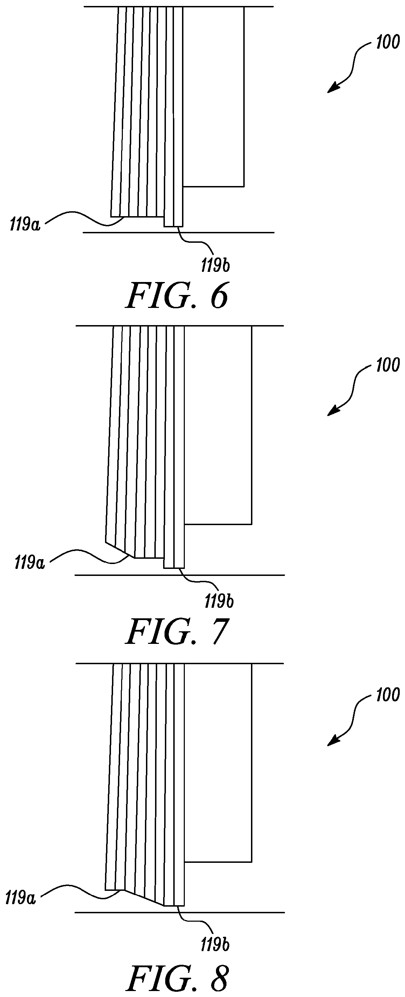

It will be appreciated that although the above disclosure is given with respect to the chamfered (frustoconical) annular brush seal of FIG. 4, the same principles apply to the upstream step of FIG. 6, the upstream chamfer-step of FIG 7 and the upstream step-chamfer of FIG 8. This is because in all the examples of FIGS. 4 to 8 a length of at least a fraction of the bristles of the upstream portion 119a of sealing face 119 is shorter than a length of the bristles of the downstream portion 119b of sealing face 119.

In all of the above examples of FIGS 4 to 8, the bristles 112 of the upstream portion 119a therefore have a larger running clearance (gap) between the rotating member 120 than the bristles 112 of the downstream portion 119b such that upstream portion 119a experiences the static pressure of upstream chamber 130. As previously disclosed, the above difference in running clearance between the upstream and downstream portions of the sealing face enables the use of hydrostatic pressure to reduce the blow-down force acting on the bristle tips, thereby reducing friction between the bristle tips and the underlying rotating member.

The wear performance of the annular brush seal is further improved if the upstream portion 119a of sealing face 119 is modified such that the sealing face additionally generates hydrodynamic lift when the rotating member 120 it seals, is rotating.

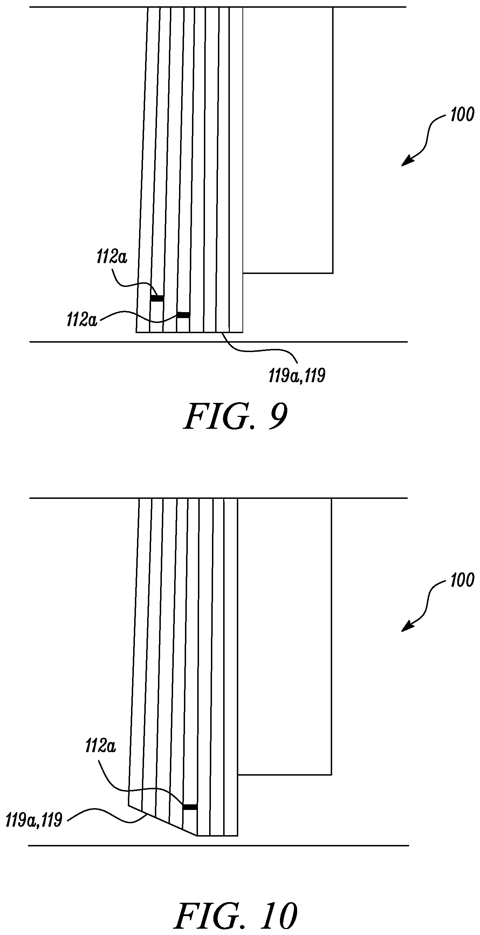

FIGS 9 to 19 and FIGS 21 and 22 illustrate potential ways to generate hydrodynamic lift to augment the hydrostatic behaviour of an annular brush seal.

It is known that hydrodynamic lift may be generated between two substantially parallel surfaces that are in relative motion to each other, if at least one of the objects comprises a step and/ or undulation in the direction of relative motion in its surface that faces the other component. For example, it is known that a "Rayleigh Step" generates hydrodynamic lift, and may be used to form an air bearing suitable for use in a personal computer hard disc drive etc.

In the previous examples and Figures, the annular brush seal has a sealing face 119 (for example, upstream portion 119a and downstream portion 119b) that is largely smooth when viewed in the direction of rotation from the perspective of rotating member 120, with the exception of minor, random variation in the radial location of adjacent bristle tips. Consequently, the preceding annular brush seals do not generate a significant degree of hydrodynamic lift when in use.

If however, the heights of the tips of the bristles of the annular brush seal are varied such that a portion of bristle tips are recessed further into the sealing surface around the circumference of the annular brush seal relative to other bristles of the sealing face, the change in surface profile of the sealing face will cause a degree of hydrodynamic lift to be obtained.

The degree of hydrodynamic lift obtained is dependent upon a number of factors, including the properties of the fluid adjacent to the sealing surface (e.g., air) and the relative velocity of the adjacent surfaces (sealing surface 119, outer surface of the rotating member 120 that faces the sealing surface 119). It is also dependent upon the length scale (i.e., size) of the steps and / or undulations in the sealing surface 119. Consequently, by varying the lengths of individual bristles or groups or bristles such that the tips of shorter bristles are recessed relative to adjacent, longer bristles, steps and / or undulations may be created in the sealing face 119 of the annular brush seal. Similarly, by varying the lengths of adjacent bristles, contoured profiles or patterns may be created in the sealing face 119.

FIGS 9 and 10 provide example arrangements of recessed bristle tips 112a in sealing face 119 for different shapes of sealing face (cylindrical, frustoconical).

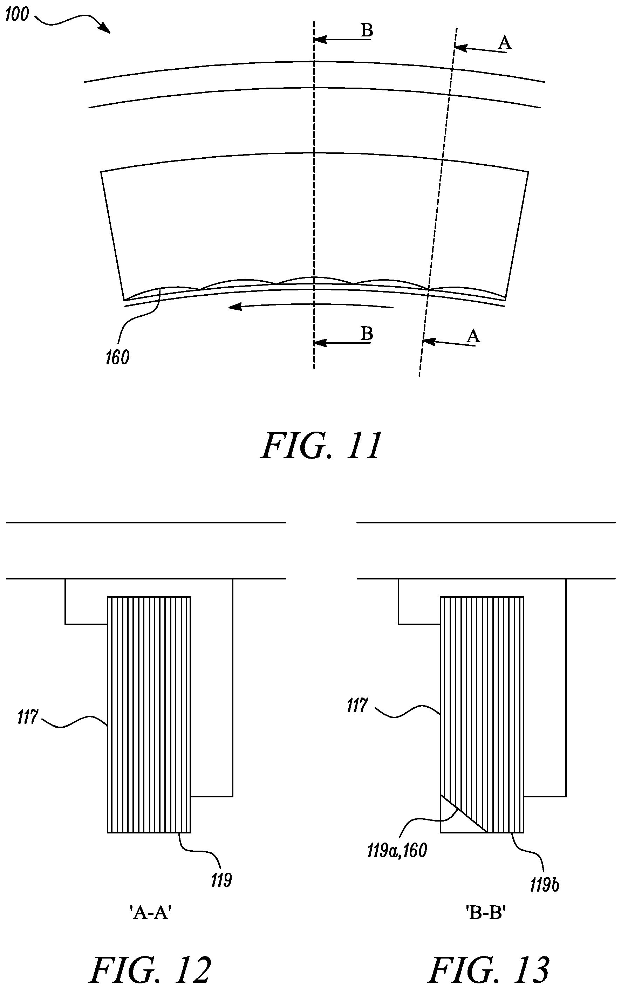

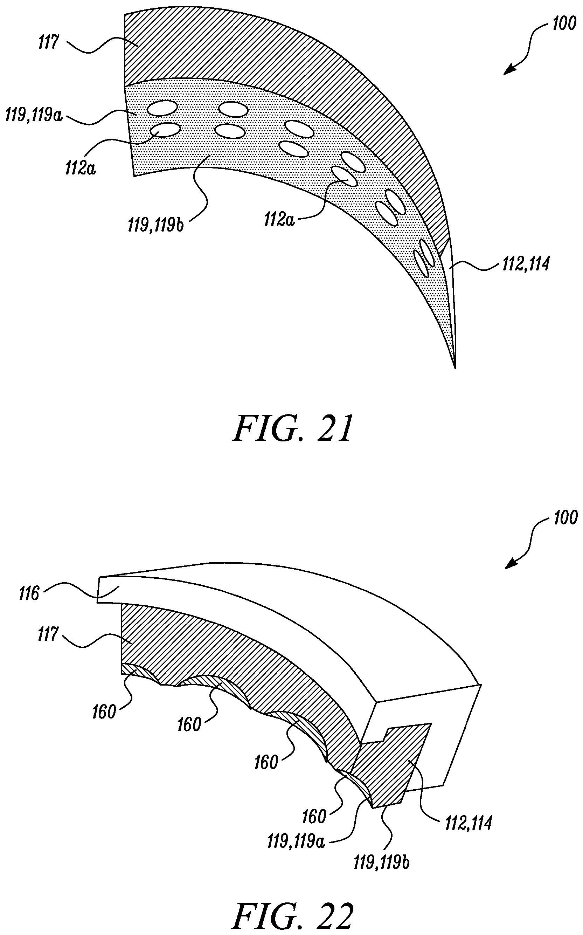

FIGS 11 to 19 provide examples of patterns (for example, a circumferentially repeating pattern) that may also be formed in the sealing surface 119 by varying the length of bristles in the bristle pack. To aid understanding three-dimensional representations of the example patterns of FIGS 9 and 11 are respectively given in FIGS 21 and 22.

It will be appreciated that although generation of hydrodynamic lift is desirable to reduce the blow-down load on the bristle tips, a primary function of the annular brush seal remains that it provides an effective seal between a fluid-filled upstream chamber and a downstream chamber. Steps and/or undulations that are present in the sealing face 119 of the bristle pack 114 of the annular brush seal 100 are an additional potential leakage source. Consequently, it is desirable that the steps and/or undulations are present only in the upstream portion 119a of the sealing face 119 of the annular brush seal 100.

Different configurations of steps and/or undulations are envisaged.

FIG 9 illustrates an example annular brush seal that at first inspection looks a conventional brush seal. However, the seal of FIG 9. comprises groupings of shorter bristles forming recessed tips 112a in the sealing face 119, the shorter bristles progressively shortening as the upstream portion of the sealing face extends from the downstream portion towards the upstream face of the bristle pack 114. This is more apparent in the three-dimensional view of a sector of sealing face 119 shown in FIG. 21.

The groupings of shortened bristles may be grouped in a circumferentially random manner throughout the upstream portion of the sealing pack.

The number of shortened bristles in a group of shortened bristles may vary between groups.

The number of shortened bristles in a group may vary between 1 and 20.

The proportion of shortened bristles relative to the total number of bristles forming the upstream portion of the sealing face may be in the range of 5% to 35%.

The proportion of shortened bristles relative to the total number of bristles forming the upstream portion of the sealing face may be in the range of 15% to 25%.

The proportion of shortened bristles relative to the total number of bristles forming the upstream portion of the sealing face may be approximately 20%.

The reduced length bristles comprising recessed tips 112a of FIG. 9 may be combined with the upstream portion sealing face chamfer of FIG. 4, as illustrated in FIG. 10. As with previous chamfered examples, the axial width of the upstream portion may be up to but not including the final two rows (downstream row and penultimate downstream row) of the tips of the bristles which form the sealing surface 119.

When combining hydrodynamic lift generated by reduced length bristle with the hydrostatic lift generated by the chamfer such as in the example of FIG. 10, it may be particularly desirable for the reduced length bristles to be present in the mid-section of the sealing face, such as between 40 to 60 percent of the axial width of the sealing face between the upstream face (corresponding to 0%) and downstream face (corresponding to 100%). This is because for a given shape of step and/or undulation, the degree of hydrodynamic lift obtained increases as the clearance between the sealing surface 119 and rotating member 120 reduces. Thus, steps and/or undulations in the mid-section of the sealing face generate proportionately more lift due to a tighter running clearance in this section, as the chamfer of FIG. 9 progressively increases the running clearance between the sealing surface and the rotating member towards the upstream face.

Larger length-scale features to promote hydrodynamic lift are also envisaged. As in previous examples, these features generate hydrodynamic lift due to a circumferentially varying change in clearance between the upstream portion 119a of the sealing face 119 and rotating member 120.

FIGS. 11 - 13 (and the related three-dimensional view of FIG. 22) show an alternative arrangement for generating additional hydrodynamic lift by using larger length scale features than the groupings of recessed bristles of FIGS 9, 10 and 21. FIG 11 shows an end on view of a portion of an annular brush seal as viewed from upstream, while FIGS 12 and 13 are cross-sections "A - A" and "B - B" at different circumferential locations.

The annular brush seal comprises a substantially cylindrically shaped sealing face. A pattern 160 is repeatedly removed around the circumference of this seal, proximal to the intersection between the upstream face 117 and the sealing face 119 to form a circumferentially repeating pattern 160.

The pattern removed is a conical pattern that partially intersects the cylindrical surface. The resulting pattern may be made by applying a conical grinding wheel to the intersection of the upstream face 117 and the upstream portion 119 or by electrical discharge machining (EDM) or by laser machining or by particle beam machining such as ion beam machining. The circumferentially repeating pattern 160 may also be referred to as a scallop, with the application of multiple repeating patterns around the circumference of the annular brush seal also referred to as scalloping.

Other forms of scalloping are also envisaged. For example, the scallop pattern may be applied to an annular brush seal comprising an upstream chamfer, such as that illustrated in FIG. 4

Furthermore, rather than applying a circumferentially repeating scallop by application of a conical grinding wheel to an annular brush seal with a cylindrical sealing face, a cylindrical grinding wheel could be used. When viewed from an upstream direction, this seal would appear identical to that shown in FIG. 11. Similarly, when viewed at cross-section "A-A" of FIG.10, this seal would appear identical to FIG. 12. However, in a comparable view to FIG 13 (section "B - B"), rather than showing a sloping surface in the upstream portion of the sealing face, a stepped surface would instead be shown, such as that shown in FIG. 6.

It will be appreciated that this form of scalloping could also be created by other means - for example, EDM, laser machining, particle beam machining etc.

Other forms of circumferentially repeating pattern 160 are also envisaged. These circumferentially repeating patterns could also be applied to either an initially cylindrical or frustoconical sealing surface.

For example, the circumferentially repeating pattern 160 may be substantially pyramidal.

In this case, four vertices of a base of a pyramid pattern lie in a plane of the sealing face 119, with two of these vertices also lying in the plane of the upstream face 117. The fifth vertex, corresponding to a tip of the pyramid lies on the upstream face 117 of the bristle pack 114, radially offset from the four vertices which form the base of the pyramid.

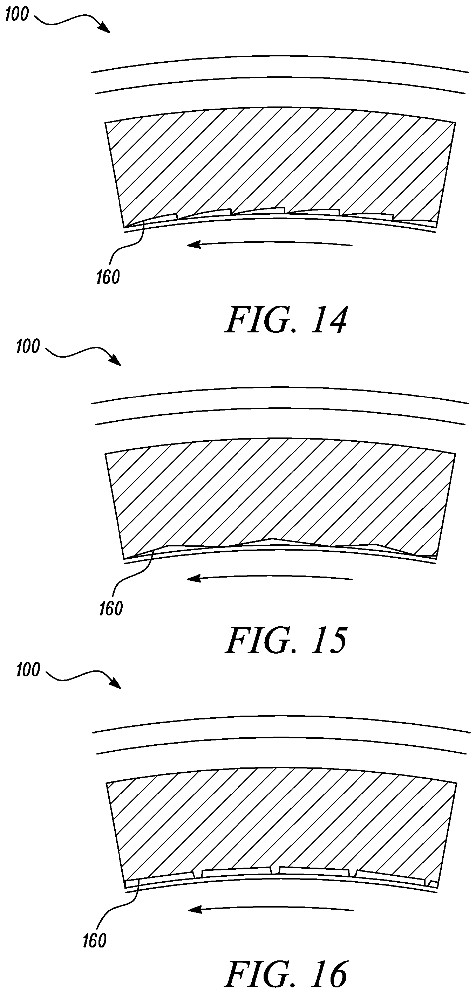

The fifth vertex of the pyramid may be circumferentially aligned with at least one of the four vertices of the base ("base vertices") of the pyramid or circumferentially proximal to at least one of the four vertices of the base . FIG. 14 shows an example of such an annular brush seal. The profile of this seal may be referred to as a saw-tooth profile.

Alternatively, the fifth vertex of the pyramid may be circumferentially interspaced, for example, equispaced, between two opposing base vertices of the circumferentially repeating pattern. FIG. 15 shows an example of such an annular brush seal.

Alternatively, the circumferentially repeating pattern 160 may be a substantially tetrahedral. In these cases, three of the vertices of the tetrahedron are base vertices and lie in the plane of sealing surface 119. Two of these base vertices also lie in the plane of the upstream face 117. The fourth vertex is radially offset from the base vertices and lies in the plane of the upstream face 117. The fourth vertex may be circumferentially aligned with one of the two base vertices in the plane of the upstream face. Alternatively, the fourth vertex of the tetrahedron may be circumferentially interspaced, for example, equi-spaced, between two opposing base vertices of the circumferentially repeating pattern.

In the above examples, (pyramid, tetrahedron), the word "substantially" is used to reflect the fact that the base of the pyramid and/or tetrahedron lies in the plane of the sealing face of the annular brush seal, and therefore has a slight curvature. This sealing face may be either cylindrical, or, if the seal comprises an upstream chamfer, frustoconical. In these examples, the base surface is therefore not two-dimensional.

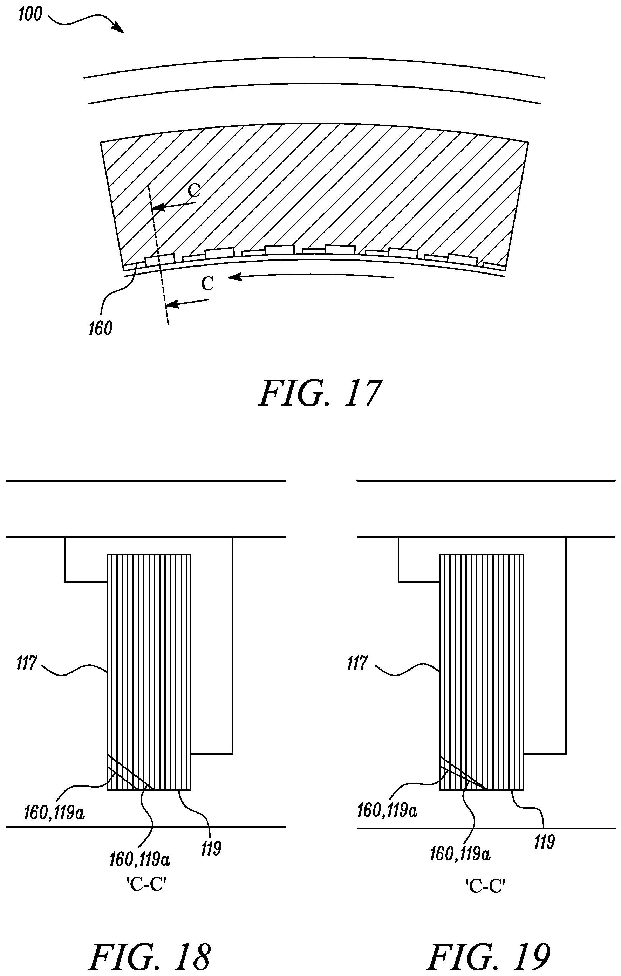

Further examples of circumferentially repeating pattern 160 are also shown in FIGS 16 and 17.

In FIG 16 the circumferentially repeating pattern 160 comprises a circumferential step of constant height.

In axial cross-section, the profile of this pattern 160 may be triangular. The resulting three-dimensional pattern may be referred to as being substantially prismatic, the word "substantially" to be interpreted in the same manner as for a pyramid or tetrahedron as disclosed above.

Alternatively, in axial cross section, the profile of this pattern 160 may be rectangular. The resulting three-dimensional pattern may be referred to as substantially cuboid, the word "substantially" to be interpreted in the same manner as for a pyramid or tetrahedron as disclosed above.

In FIG 17, the circumferentially repeating profile comprises a double step, comprising a first substantially prismatic shape directly connected to a second substantially prismatic shape or alternatively, a first substantially cuboid shape directly connected to a second substantially cuboid shape.

Examples of different forms of first substantially prismatic shape and second substantially prismatic shape are illustrated in FIGS 18 and 19.

Although in the above disclosure of FIGS 11 to 19, only a single circumferentially repeating pattern (e.g. substantially pyramidal, substantially tetrahedral, substantially cuboid, substantially prismatic, scallop) has been disclosed, it will be appreciated that it is possible to combine (i.e. circumferentially interleave) different repeating patterns together as a first circumferentially repeating pattern and a second circumferentially repeating pattern. The different patterns may differ in shape and/or size. For example, a "small" scallop pattern may be circumferentially interleaved with a "large" scallop pattern; a cuboid pattern may be interleaved with a pyramidal pattern etc. Similarly, three of more patterns (first circumferentially repeating pattern, second circumferentially repeating pattern....$n^{th}$ circumferentially repeating pattern) may be combined together, for example a "small" scallop pattern may be combined with a "medium" scallop pattern and a "large" scallop pattern"; a "large" pyramidal pattern may be combined with a "small" cuboid pattern and a "large" prismatic pattern etc.

Combining different types and /or sizes of circumferentially repeating pattern 160 in this way may be desirable because the magnitude of hydrodynamic lift generated by each repeating pattern may differ. Therefore, by selection of multiple different circumferentially repeating patterns 160, the lift characteristic of the seal may be optimised over a wider range of operation.

As previously disclosed, the degree of compaction of the bristles of the bristle pack enables one portion of the bristle pack to lift another portion of the bristle pack, with this effect reducing as the separation between these portions increases. Each pattern of the circumferentially repeating pattern therefore generates hydrodynamic lift local to that pattern. A number of the patterns of the circumferentially repeating patterns 160 may therefore be selected based at least part on the degree of compaction of the bristles of the bristle pack and the diameter of the brush seal. A number of the circumferentially repeating pattern may be in the range of 10 to 200 circumferentially repeating patterns per metre circumference of the brush seal. Preferably, the number of the circumferentially repeating pattern may be in the range of 40 to 200 circumferentially repeating patterns per metre circumference of the brush seal.

The circumferentially repeating patterns may be equispaced around the circumference of the sealing face of the annular brush seal. In other words, the circumferentially repeating pattern may be periodic circumferentially repeating pattern.

It may be appreciated that as the contact force between the annular brush seal and adjacent rotating member varies in a circumferential direction, this varying contact force has the potential to generate vibration.

A vibrational frequency of the vibration may be equal to a passing frequency of the individual patterns past a point rotating with the rotating member (i.e. the passing frequency (Hz) may equal the rotating member rotational speed (revolutions / second) multiplied by the number of circumferentially repeating patterns.). Alternatively, the vibrational frequency may be equal to a harmonic of the passing frequency.

By way of mitigation, the vibrational frequency may be tuned such that it does not coincide with vibrational frequencies of other components within the apparatus. This may be accomplished by setting the number of the circumferentially repeating pattern around the circumference to be a prime number.

Hence (assuming between 10 to 200 patterns per metre circumference), the number of circumferentially repeating patterns per metre circumference may be selected from one of 11, 13, 17, 19, 23, 29, 31, 37, 41, 43, 47, 53, 59, 61, 67, 71, 73, 79, 83, 89, 97, 101, 103, 107, 109, 113, 127, 131, 137, 139, 149, 151, 157, 163, 167, 173, 179, 181, 191, 193, 197, 199 patterns per metre circumference of the brush seal.

Preferably, (assuming between 40 - 200 patterns per metre circumference), the number of the circumferentially repeating pattern to be selected from one of 41, 43, 47, 53, 59, 61, 67, 71, 73, 79, 83, 89, 97, 101, 103, 107, 109, 113, 127, 131, 137, 139, 149, 151, 157, 163, 167, 173, 179, 181, 191, 193, 197, 199 repeating patterns per metre circumference of the brush seal.

Alternatively or in addition, the propensity for vibration may be attenuated by altering the amplitude of the adjacent circumferentially repeating pattern to substantially detune the vibrational characteristics of the seal from other components of the apparatus comprising the seal. The size (depth or height or penetration of the repeating pattern into the bristle pack) may vary around the circumference in a pre-determined combination (for example, circumferentially interleaving a "small" scallop pattern with a "large" scallop pattern etc). Alternatively, this variation may be random or pseudo-random.

From the previous disclosure, it will be now understood that the objective of the invention is to make use of hydrostatic and hydrodynamic forces, to control the contact force between the tips of the bristles of the bristle pack and the rotating member.

However, as shown in FIG. 3, the downstream bristles in particular may be supported by backing plate 116a. Friction between backing plate 116a and the downstream bristles may impede movement of these bristles, despite the application of the hydrostatic and hydrodynamic lift generating features previously disclosed. Indeed, it has also been disclosed with reference to FIG. 5C how a larger upstream chamfer angle may detrimentally increase friction between downstream bristles of the bristle pack and the backing plate 116a.

In the examples of FIG. 3 and FIG 5C, the backing plate 116a is planar and is orientated in a substantially radial plane (i.e., substantially perpendicular to a rotational axis of rotating member 120).

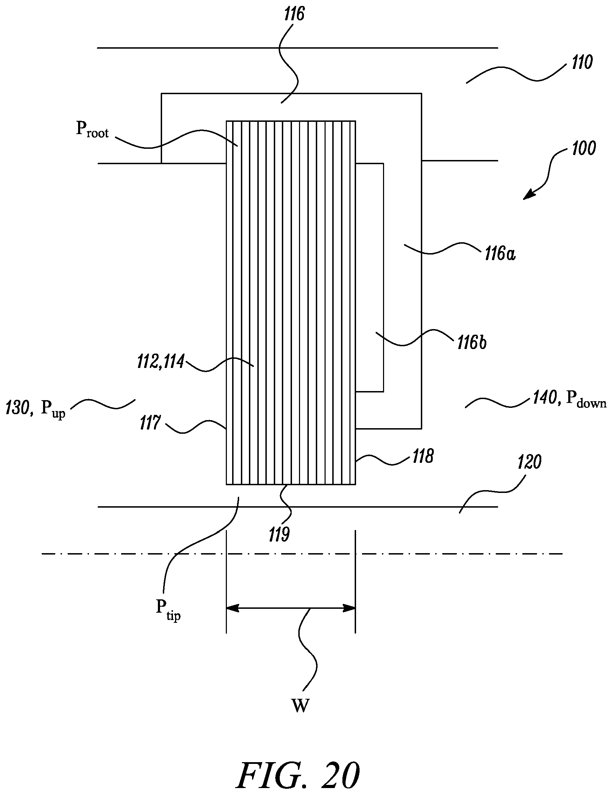

FIG. 20 shows a modification to the backing plate that may be used in combination with the above hydrostatic and hydrodynamic lift generating features illustrated in FIGS 4 to 19 to improve the ease with which the bristles of the bristle pack moves in unison when subjected to a pressure force acting on tips of the bristles at the sealing face.

In FIG.20, the surface of the backing plate facing the bristle pack comprises at least one groove 116b that extends in a radial direction from a radially inner region of the backing plate 116a to a radially outer region of the backing plate. In other words, the at least one groove 116b of FIG. 20 is a radially-extending groove, having a radially inboard end and extending in a radially outboard direction to a radially outboard end, in a surface of the backing plate that faces the bristle pack.

The at least one groove 116b is pressurised by the fluid sealed by the annular brush seal that has permeated through the bristle pack 114 from the upstream chamber 130. By pressurising the at least one groove, frictional forces between the downstream bristles and the backing plate are reduced, permitting easier movement of these bristles.

If the at least one radially-extending groove is a single radially-extending groove, the single radially extending groove may also extend in a circumferential direction. Thus, the at least one radially-extending groove may be an annular groove.

Alternatively, the at least one radially-extending groove may be a plurality of radially-extending grooves. If a plurality of radially-extending grooves are used, the radially-extending grooves may not extend solely in a radial direction but may also extend in a circumferential direction. If the backing plate comprises a plurality of radially-extending grooves, an orientation of the plurality of radially-extending grooves in the surface of the backing plate is different to an orientation of the bristles of the bristle pack, when viewed in a circumferential plane. The orientation (i.e., the alignment) of the radially-extending grooves and the orientation of the bristles may be perpendicular to each other. In this way, a greater proportion of the bristles in the downstream row of the bristle pack may be exposed to the pressure force acting within the radially-extending grooves in the surface (face) of the backing plate that faces the bristle pack.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein, to the extent that they fall within the scope of the claims.

**Claims**

1. An annular brush seal (100) comprising a bristle pack (114) formed of bristles (112) and a bristle pack support (116), supporting the bristle pack (114), wherein:

   the bristle pack (114) has an upstream face (117), a downstream face (118) and a sealing face (119);
   the sealing face (119) comprises an upstream portion (119a) and a downstream portion (119b) that is adjacent to the upstream portion (119a);
   wherein a length of at least a fraction of the bristles (112) of the upstream portion (119a) is shorter than a length of the bristles (112) of the downstream portion (119b) and the length of the at least a fraction of bristles (112) of the upstream portion (119a) decreases as the upstream portion (119a) of the sealing face (119) extends from the downstream portion (119b) of the sealing face (119) towards the upstream face (117); and
   **characterised in that**
   the decrease in length of the bristles in the upstream portion (119a) of the sealing surface (119) varies to form a circumferentially repeating pattern (160) at an interface between the upstream portion (119a) of the sealing surface (119) and the upstream surface (117).

2. The annular brush seal (100) as claimed in claim 1, wherein an axial extent of the upstream portion (119a) of the sealing face (119) is no more than (n-2) rows, wherein n is a number of rows of bristles (112) of the bristle pack (114).

3. The annular brush seal (100) as claimed in claim 1 or 2, wherein a diameter of the bristles of the bristle pack is in the range of 75 to 200 micrometres; preferably in the range of 100 to 150 micrometres.

4. The annular brush seal (100) as claimed in any preceding claim wherein a lay angle of the bristles of the bristle pack in the range of 20 degrees to 55 degrees; preferably in the range of 30 degrees to 45 degrees.

5. The annular brush seal (100) as claimed in claim 1 wherein the circumferentially repeating pattern (160) is a periodic circumferentially repeating pattern.

6. The annular brush seal (100) as claimed in claim 1 wherein the annular brush seal comprises a number of the circumferentially repeating pattern (160) in the range of 10 to 200 circumferentially repeating patterns per metre circumference of the annular brush seal (100).

7. The annular brush seal (100) as claimed in claim 6 wherein the number of circumferentially repeating patterns is a prime number.

8. The annular brush seal (100) as claimed in claim 1 wherein the circumferentially repeating pattern (160) is configured to generate hydrodynamic lift when the brush seal seals a rotating member (120).

9. The annular brush seal (100) as claimed in claim 1 wherein:

the circumferentially repeating pattern (160) is a scallop; or,
the circumferentially repeating pattern (160) is substantially pyramidal; or,
the circumferentially repeating pattern (160) is substantially tetrahedral; or,
the circumferentially repeating pattern (160) is substantially prismatic; or
the circumferentially repeating pattern (160) is substantially cuboid.

10. The annular brush seal (100) as claimed in claim 1 wherein

the circumferentially repeating pattern (160) comprises a first substantially prismatic shape directly connected to a second substantially prismatic shape or
the circumferentially repeating pattern (160) comprises a first substantially cuboid shape directly connected to a second substantially cuboid shape or
the circumferentially repeating pattern (160) comprises a first substantially prismatic shape directly connected to a first substantially cuboid shape.

11. The annular brush seal (100) as claimed in claim 1, wherein the annular brush seal comprises a first circumferentially repeating pattern that is circumferentially interleaved with a second circumferentially repeating pattern, wherein the first circumferentially repeating pattern and the second circumferentially repeating pattern are each selected from the circumferentially repeating patterns of claim 9.

12. The annular brush seal (100) as claimed in any preceding claim wherein the bristle pack support (116) comprises a backing plate (116a), the backing plate (116a) configured to mechanically support the bristle pack (114) when the bristle pack (114) is subjected to a pressure differential across the brush seal (100).

13. The annular brush seal (100) as claimed in claim 12, wherein the backing plate (116a) comprises at least one radially-extending groove (116b) in a surface facing the bristle pack (114), the at least one radially-extending groove being (116b) configured to permit the application of a pressure force between the downstream bristles of the bristle pack (114) and the surface facing the bristle pack (114).

14. The annular brush seal (100) as claimed in claim 12, wherein the at least one radially-extending groove (116b) is an annular groove in the surface of the backing plate facing the bristle pack.

15. A gas turbine engine (10) comprising the annular brush seal (100) as claimed in any preceding claim.

**Patentansprüche**

1. Ringförmige Bürstendichtung (100), die ein Borstenpaket (114), das aus Borsten (112) gebildet ist, und einen Borstenpaketträger (116) umfasst, der das Borstenpaket (114) trägt, wobei:

das Borstenpaket (114) eine stromaufwärtige Fläche (117), eine stromabwärtige Fläche (118) und eine Dichtfläche (119) aufweist;
die Dichtfläche (119) einen stromaufwärtigen Abschnitt (119a) und einen stromabwärtigen Abschnitt (119b) umfasst, der an den stromaufwärtigen Abschnitt (119a) angrenzt;
wobei eine Länge von mindestens einem Bruchteil der Borsten (112) des stromaufwärtigen Abschnitts (119a) kürzer als eine Länge der Borsten (112) des stromabwärtigen Abschnitts (119b) ist und die Länge des mindestens einen Bruchteils der Borsten (112) des stromaufwärtigen Abschnitts (119a) abnimmt, wenn sich der stromaufwärtige Abschnitt (119a) der Dichtfläche (119) von dem stromabwärtigen Abschnitt (119b) der Dichtfläche (119) zu der stromaufwärtigen Fläche (117) erstreckt; und
**dadurch gekennzeichnet, dass** die Abnahme der Länge der Borsten in dem stromaufwärtigen Abschnitt (119a) der Dichfläche (119) variiert, um ein sich in Umfangsrichtung wiederholendes Muster (160) an einer Schnittstelle zwischen dem stromaufwärtigen Abschnitt (119a) der Dichtfläche (119) und der stromaufwärtigen Oberfläche (117) zu bilden.

2. Ringförmige Bürstendichtung (100) nach Anspruch 1, wobei eine axiale Erstreckung des stromaufwärtigen Abschnitts (119a) der Dichtfläche (119) nicht mehr als (n-2) Reihen beträgt, wobei n eine Anzahl von Reihen von Borsten (112) des Borstenpakets (114) ist.

3. Ringförmige Bürstendichtung (100) nach Anspruch 1 oder 2, wobei ein Durchmesser der Borsten des Borstenpakets im Bereich von 75 bis 200 Mikrometer liegt; bevorzugt im Bereich von 100 bis 150 Mikrometer.

4. Ringförmige Bürstendichtung (100) nach einem vorhergehenden Anspruch, wobei ein Schlagwinkel der Borsten des Borstenpakets im Bereich von 20 Grad bis 55 Grad; vorzugsweise im Bereich von 30 Grad bis 45 Grad.

5. Ringförmige Bürstendichtung (100) nach Anspruch 1, wobei das sich in Umfangsrichtung wiederholende Muster (160) ein periodisches, sich in Umfangsrichtung wiederholendes Muster ist.

6. Ringförmige Bürstendichtung (100) nach Anspruch 1, wobei die ringförmige Bürstendichtung eine Anzahl des sich in Umfangsrichtung wiederholenden Musters (160) im Bereich von 10 bis 200 sich in Umfangsrichtung wiederholenden Mustern pro Meter Umfang der ringförmigen Bürstendichtung (100) umfasst.

7. Ringförmige Bürstendichtung (100) nach Anspruch 6, wobei die Anzahl von sich in Umfangsrichtung wiederholenden Mustern eine Primzahl ist.

8. Ringförmige Bürstendichtung (100) nach Anspruch 1, wobei das sich in Umfangsrichtung wiederholende Muster (160) dazu konfiguriert ist, einen hydrodynamischen Auftrieb zu erzeugen, wenn die Bürstendichtung ein rotierendes Element (120) abdichtet.

9. Ringförmige Bürstendichtung (100) nach Anspruch 1, wobei:

das sich in Umfangsrichtung wiederholende Muster (160) eine Welligkeit ist; oder
das sich in Umfangsrichtung wiederholende Muster (160) im Wesentlichen pyramidenförmig ist; oder
das sich in Umfangsrichtung wiederholende Muster (160) im Wesentlichen tetraedrisch ist; oder
das sich in Umfangsrichtung wiederholende Muster (160) im Wesentlichen prismatisch ist; oder
das sich in Umfangsrichtung wiederholende Muster (160) im Wesentlichen quaderförmig ist.

10. Ringförmige Bürstendichtung (100) nach Anspruch 1, wobei

das sich in Umfangsrichtung wiederholende Muster (160) eine erste im Wesentlichen prismatische Form umfasst, die direkt mit einer zweiten im Wesentlichen prismatischen Form verbunden ist, oder
das sich in Umfangsrichtung wiederholende Muster (160) eine erste im Wesentlichen quaderförmige Form umfasst, die direkt mit einer zweiten im Wesentlichen quaderförmigen Form verbunden ist, oder
das sich in Umfangsrichtung wiederholende Muster (160) eine erste im Wesentlichen prismatische Form umfasst, die direkt mit einer ersten im Wesentlichen quaderförmigen Form verbunden ist.

11. Ringförmige Bürstendichtung (100) nach Anspruch 1, wobei die ringförmige Bürstendichtung ein erstes sich in Umfangsrichtung wiederholendes Muster umfasst, das in Umfangsrichtung mit einem zweiten sich in Umfangsrichtung wiederholenden Muster ineinander geschachtelt ist, wobei das erste sich in Umfangsrichtung wiederholende Muster und das zweite sich in Umfangsrichtung wiederholende Muster jeweils aus den sich in Umfangsrichtung wiederholenden Mustern gemäß Anspruch 9 ausgewählt sind.

12. Ringförmige Bürstendichtung (100) nach einem vorhergehenden Anspruch, wobei der Borstenpaketträger (116) eine Stützplatte (116a) umfasst, wobei die Stützplatte (116a) dazu konfiguriert ist, das Borstenpaket (114) mechanisch zu tragen, wenn das Borstenpaket (114) einem Druckunterschied über die Bürstendichtung (100) ausgesetzt ist.

13. Ringförmige Bürstendichtung (100) nach Anspruch 12, wobei die Stützplatte (116a) mindestens eine sich radial erstreckende Nut (116b) in einer Oberfläche umfasst, die dem Borstenpaket (114) zugewandt ist, wobei die mindestens eine sich radial erstreckende Nut (116b) dazu konfiguriert ist, das Aufbringen einer Druckkraft zwischen den stromabwärtigen Borsten des Borstenpakets (114) und der dem Borstenpaket (114) zugewandten Oberfläche zu ermöglichen.

14. Ringförmige Bürstendichtung (100) nach Anspruch 12, wobei die mindestens eine sich radial erstreckende Nut (116b) eine Ringnut in der Oberfläche der Stützplatte ist, die dem Borstenpaket zugewandt ist.

**15.** Gasturbinentriebwerk (10), umfassend die ringförmige Bürstendichtung (100) nach einem vorhergehenden Anspruch.

**Revendications**

1. Joint à brosse annulaire (100) comprenant une garniture de poils (114) formée de poils (112) et un support de garniture de poils (116), supportant la garniture de poils (114), dans lequel :

   la garniture de poils (114) a une face amont (117), une face aval (118) et une face d'étanchéité (119) ;
   la face d'étanchéité (119) comprend une partie amont (119a) et une partie aval (119b) qui est adjacente à la partie amont (119a) ;
   dans lequel une longueur d'au moins une fraction des poils (112) de la partie amont (119a) est plus courte qu'une longueur des poils (112) de la partie aval (119b) et la longueur de l'au moins une fraction de poils (112) de la partie amont (119a) diminue à mesure que la partie amont (119a) de la face d'étanchéité (119) s'étend de la partie aval (119b) de la face d'étanchéité (119) vers la face amont (117) ; et
   **caractérisé en ce que** la diminution de la longueur des poils dans la partie amont (119a) de la surface d'étanchéité (119) varie pour former un motif répétitif circonférentiel (160) au niveau d'une interface entre la partie amont (119a) de la surface d'étanchéité (119) et la surface amont (117).

2. Joint à brosse annulaire (100) selon la revendication 1, dans lequel une étendue axiale de la partie amont (119a) de la face d'étanchéité (119) n'est pas supérieure à (n-2) rangées, dans lequel n est un nombre de rangées de poils (112) de la garniture de poils (114).

3. Joint à brosse annulaire (100) selon la revendication 1 ou 2, dans lequel un diamètre des poils de la garniture de poils est compris dans la plage de 75 à 200 micromètres ; de préférence dans la plage de 100 à 150 micromètres.

4. Joint à brosse annulaire (100) selon l'une quelconque des revendications précédentes, dans lequel un angle de pose des poils de la garniture de poils dans la plage de 20 degrés à 55 degrés ; de préférence dans la plage de 30 degrés à 45 degrés.

5. Joint à brosse annulaire (100) selon la revendication 1, dans lequel le motif répétitif circonférentiel (160) est un motif périodique répétitif circonférentiel.

6. Joint à brosse annulaire (100) selon la revendication 1, dans lequel le joint à brosse annulaire comprend un nombre de motifs répétitif circonférentiel (160) dans la plage de 10 à 200 motifs répétitif circonférentiel par mètre de circonférence du joint à brosse annulaire (100).

7. Joint à brosse annulaire (100) selon la revendication 6, dans lequel le nombre de motifs répétitif circonférentiel est un nombre premier.

8. Joint à brosse annulaire (100) selon la revendication 1, dans lequel le motif répétitif circonférentiel (160) est configuré pour générer une portance hydrodynamique lorsque le joint à brosse assure l'étanchéité d'un élément rotatif (120).

9. Joint à brosse annulaire (100) selon la revendication 1, dans lequel :

   le motif répétitif circonférentiel (160) est une forme festonnée ; ou,
   le motif répétitif circonférentiel (160) est sensiblement pyramidal ; ou,
   le motif répétitif circonférentiel (160) est sensiblement tétraédrique ; ou,
   le motif répétitif circonférentiel (160) est sensiblement prismatique ; ou
   le motif répétitif circonférentiel (160) est sensiblement cuboïde.

10. Joint à brosse annulaire (100) selon la revendication 1, dans lequel

   le motif répétitif circonférentiel (160) comprend une première forme sensiblement prismatique directement raccordée à une deuxième forme sensiblement prismatique ou
   le motif répétitif circonférentiel (160) comprend une première forme sensiblement cuboïde directement raccordée à une deuxième forme sensiblement cuboïde ou

le motif répétitif circonférentiel (160) comprend une première forme sensiblement prismatique directement raccordée à une première forme sensiblement cuboïde.

11. Joint à brosse annulaire (100) selon la revendication 1, dans lequel le joint à brosse annulaire comprend un premier motif répétitif circonférentiel qui est entrelacé circonférentiellement avec un deuxième motif répétitif circonférentiel, dans lequel le premier motif répétitif circonférentiel et le deuxième motif répétitif circonférentiel sont chacun sélectionnés parmi les motifs répétitif circonférentiel selon la revendication 9.

12. Joint à brosse annulaire (100) selon l'une quelconque des revendications précédentes, dans lequel le support de garniture de poils (116) comprend une plaque arrière (116a), la plaque arrière (116a) étant conçue pour supporter mécaniquement la garniture de poils (114) lorsque la garniture de poils (114) est soumise à une différence de pression à travers le joint à brosse (100).

13. Joint à brosse annulaire (100) selon la revendication 12, dans lequel la plaque arrière (116a) comprend au moins une rainure s'étendant radialement (116b) dans une surface faisant face à la garniture de poils (114), l'au moins une rainure s'étendant radialement (116b) étant conçue pour permettre l'application d'une force de pression entre les poils en aval de la garniture de poils (114) et la surface faisant face à la garniture de poils (114).

14. Joint à brosse annulaire (100) selon la revendication 12, dans lequel l'au moins une rainure s'étendant radialement (116b) est une rainure annulaire dans la surface de la plaque arrière faisant face à la garniture de poils.

15. Moteur à turbine à gaz (10) comprenant le joint à brosse annulaire (100) selon l'une quelconque des revendications précédentes.

# FIG. 1

*FIG. 2*

*FIG. 3*

*FIG. 4*

*FIG. 5A*

*FIG. 5B*

FIG. 5C

FIG. 5D

100

119a

119b

**FIG. 6**

100

119a

119b

**FIG. 7**

100

119a

119b

**FIG. 8**

*112a*

*112a*

*119a,119*

FIG. 9

*112a*

*119a,119*

FIG. 10

100

160

**FIG. 11**

117

119

'A-A'

**FIG. 12**

117

119a,160

119b

'B-B'

**FIG. 13**

100

160

**FIG. 14**

100

160

**FIG. 15**

100

160

**FIG. 16**

*FIG. 17*

*FIG. 18*     *FIG. 19*

**FIG. 20**

**FIG. 21**

**FIG. 22**

**EP 4 660 487 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2367099 A